(19) **Europäisches Patentamt / European Patent Office / Office européen des brevets**

(11) **EP 2 577 224 B1**

(12) **FASCICULE DE BREVET EUROPEEN**

(45) Date de publication et mention de la délivrance du brevet:
**06.11.2019 Bulletin 2019/45**

(21) Numéro de dépôt: **11728315.0**

(22) Date de dépôt: **30.05.2011**

(51) Int Cl.:
*G01B 11/10* (2006.01)    *G01B 17/02* (2006.01)
*G01N 29/44* (2006.01)    *G01N 29/04* (2006.01)
*G01N 29/28* (2006.01)    *G01N 29/30* (2006.01)
*G06F 17/50* (2006.01)

(86) Numéro de dépôt international:
**PCT/FR2011/000319**

(87) Numéro de publication internationale:
**WO 2011/151538 (08.12.2011 Gazette 2011/49)**

(54) **PROCÉDÉ ET DISPOSITIF D'AIDE AU CONTRÔLE EN PRODUCTION DE LA TRAVERSABILITÉ DE TUBES**

PRODUKTIONSSTEUERUNGSVERFAHREN UND VORRICHTUNG ZUR ÜBERPRÜFUNG DER TRAVERSIERBARKEIT VON ROHREN

PRODUCTION CONTROL METHOD AND DEVICE FOR CHECKING THE TRAVERSABILITY OF PIPES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2010 FR 1002351**

(43) Date de publication de la demande:
**10.04.2013 Bulletin 2013/15**

(73) Titulaire: **Vallourec Tubes France**
**92100 Boulogne-Billancourt (FR)**

(72) Inventeurs:
• **NITSCHE, Stefan**
  **45475 Mulheim/Ruhr (DE)**
• **GROOS, Andreas**
  **47509 Rheurdt (DE)**
• **GUO, Xiaoxing**
  **F-59300 Valenciennes (FR)**
• **NOURRIT, Nicolas**
  **F-59530 Le Quesnoy (FR)**
• **SEGURA, Alejandra**
  **F-59300 Valenciennes (FR)**

(74) Mandataire: **de Kernier, Gabriel**
  **Cabinet Netter**
  **Conseils en Propriété Industrielle**
  **36, avenue Hoche**
  **75008 Paris (FR)**

(56) Documents cités:
**EP-A1- 0 716 301          EP-A2- 0 444 800**
**DE-B3-102008 060 391     US-A- 6 091 500**

**Description**

L'invention concerne l'aide au contrôle en production de tubes, tels que les tubes d'application pétrolière.

On fabrique aujourd'hui des tubes sans soudure en acier, notamment pour des applications pétrolières de forage ou d'exploitation. Ces tubes possèdent une longueur individuelle de l'ordre de 10m, et se connectent les uns aux autres pour former une conduite de grande longueur. Ils se distinguent par les caractéristiques de leur connexion, ainsi que par leur diamètre extérieur. Mais, en application, il importe aussi de connaître le diamètre intérieur libre du tube. Celui-ci est souvent plus faible au niveau des connexions d'extrémités, qui sont rapportées sur le tube brut de fabrication.

Le document EP 0 444 800 divulgue un appareil de mesure pour tubes en acier.

La fabrication des tubes est soumise à différentes normes de contrôle. L'une de celles-ci veut que l'on puisse faire passer à l'intérieur du tube un corps de calibrage dit « drift », tel qu'un cylindre de diamètre et de longueur bien déterminées. Ce contrôle peut être mené sur toute la longueur du tube, ou bien seulement au niveau de ses extrémités, où le passage peut être plus difficile. Dans le domaine pétrolier, la géométrie du corps de calibrage et les autres conditions du test sont définis dans la norme API 5 CT / ISO 11950.

Le document DE 10 2008 060 391 B3 divulgue aussi un procédé et un dispositif pour le contrôle de tubes en acier pour établir un diagnostic de la traversabilité par un corps de calibrage.

En pratique, cela entraîne différentes difficultés, qui vont de la nécessité de prévoir plusieurs corps de calibrage de caractéristiques différentes, pour couvrir une gamme de tubes, jusqu'à la gestion du risque que le corps de calibrage ne se coince à l'intérieur du tube.

La présente invention vient améliorer la situation.

Est d'abord proposé un procédé d'aide au contrôle de tubes en acier en production selon la revendication 1.

Est également proposé un dispositif d'aide au contrôle dimensionnel de tubes en acier en production selon la revendication 7.

D'autres caractéristiques et avantages de l'invention apparaîtront à l'aide de la description qui suit, et des dessins annexés, sur lesquels:

- La figure 1 est le diagramme de principe général d'un mode de production d'un tube d'acier,
- La figure 2 est le schéma de principe d'une installation de test de tube, selon un premier mode de réalisation,
- La figure 3 est le schéma plus détaillé de l'élément 1200 de la figure 2,
- La figure 4 illustre la répartition des mesures de l'élément 1200 le long du tube,
- La figure 5 est le schéma plus détaillé de l'élément 1400 de la figure 2,
- La figure 6 illustre la répartition des mesures de l'élément 1400 le long du tube,
- La figure 7 illustre la section longitudinale d'un tronçon de tube, avec des notations sur la courbure du tube,
- La figure 8 est le schéma de principe d'une installation de test de tube, selon un second mode de réalisation, où le tube traverse une boîte à eau 2000,
- La figure 9 est le schéma de principe d'un tube traversant une boîte à eau d'un premier type,
- La figure 10 est le schéma de principe d'un tube traversant une boîte à eau d'un second type, à capteurs ultrasonores tournants,
- La figure 11 illustre la répartition des mesures des capteurs de la figure 10 le long du tube,
- La figure 12 est le schéma de principe d'un tube traversant une boîte à eau d'un troisième type, à capteurs ultrasonores fixes,
- La figure 13 illustre une convention de représentation des capteurs de la figure 12,
- La figure 14 illustre la répartition des mesures des capteurs de la figure 12 le long du tube,
- La figure 15 illustre un mode de réalisation particulier, selon la convention de la figure 13,
- La figure 15A illustre un détail de la figure 15,
- La figure 16 illustre en détail une partie de la répartition des mesures des capteurs de la figure 15 le long du tube.

Les dessins et les annexes à la description comprennent des éléments de caractère certain. Ils pourront donc non seulement servir à mieux faire comprendre la description, mais aussi contribuer à la définition de l'invention, le cas échéant Le domaine de protection est défini par les revendications.

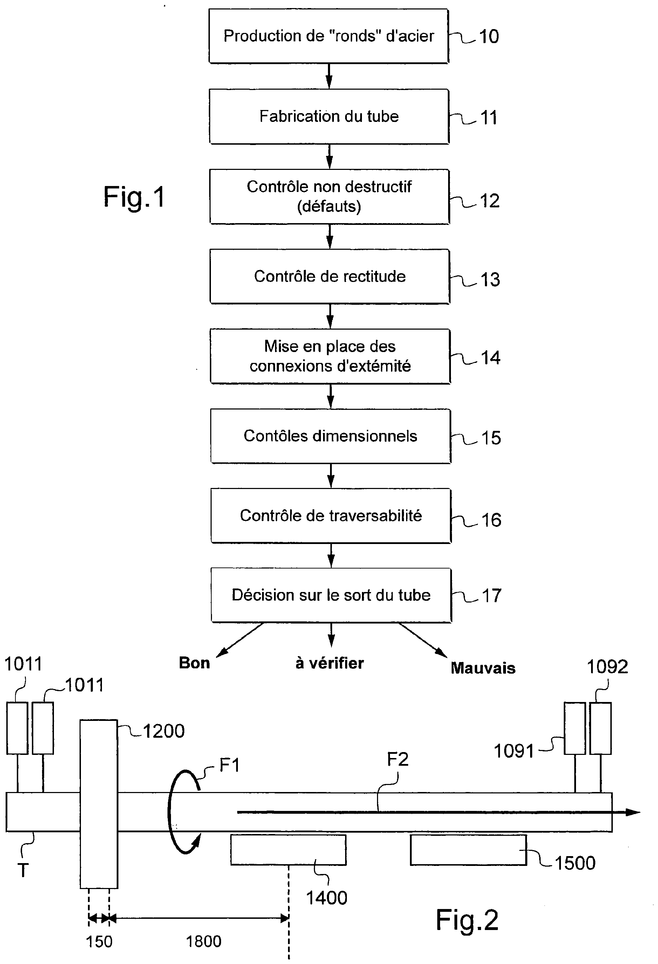

Il est maintenant fait référence à la figure 1, qui illustre schématiquement le processus complet de fabrication d'un tube, par exemple pour application dans les puits de pétrole. Les opérations ne sont pas nécessairement dans l'ordre, et certaines peuvent être réalisées en même temps.

La première opération 10 est la fabrication d'un tube d'acier plein, que l'on appelle "rond" dans la technique.

Ensuite, un tube sans soudure est fabriqué à l'opération 11, par laminage/extrusion à chaud sur un mandrin, ou sur une poire de perçage montée au bout d'une tige, et qui passe dans l'axe du tube.

L'opération 12 comprend des contrôles non destructifs pour situer d'éventuels défauts dans le tube. Ces contrôles non destructifs peuvent prendre différentes formes, faisant intervenir par exemple les ultrasons, ou encore les courants de Foucault.

L'opération 13 comprend ensuite un contrôle de la rectitude du tube. Ce contrôle peut s'effectuer manuellement avec une règle, ou bien à l'aide d'un laser. Dans le domaine pétrolier, les critères de rectitude sont fixés par la norme API 5 CT / ISO 11950 précitée.

Après cela, l'opération 14 consiste à fileter les deux extrémités du tube, généralement l'une mâle, l'autre femelle. Cela peut se faire par exemple par taraudage direct sur les deux extrémités du tube, soit par ajout d'embouts de connexion préalablement filetés à celles-ci. Certains tubes, destinés à être raccordés par soudage, peuvent n'être pas filetés.

D'autres contrôles dimensionnels peuvent être effectués à l'opération 15.

C'est alors qu'intervient, à l'opération 16, un contrôle de "traversabilité" qui vérifie qu'un corps de calibrage de caractéristiques bien déterminées peut traverser le tube soit de bout en bout, soit plus simplement sur un ou plusieurs segments de tube. Le plus fréquent est de travailler sur deux segments d'extrémité, là où le diamètre peut se trouver réduit du fait de la mise en place des connexions filetées.

Après l'opération 16, on va procéder à l'opération 17 à une décision sur le sort du tube. Cette décision tient compte des résultats obtenus à l'opération 16. Elle peut tenir compte aussi de problèmes rencontrés aux opérations antérieures (12, 14 et 15, principalement), si ces problèmes n'ont pas eu pour effet l'élimination immédiate du tube, avant d'arriver à l'opération 16. A l'opération 17, la décision peut être de qualifier le tube comme bon, à l'opposé de le qualifier comme mauvais, ou, dans une situation intermédiaire d'incertitude, de décider de procéder sur le tube à d'autres vérifications, par exemple manuelles.

La présente invention s'intéresse essentiellement à l'opération 16, ainsi qu'à la décision qui s'ensuit à l'opération 17. Cependant, comme on le verra, ces opérations ne sont pas indépendantes de ce qui s'est passé antérieurement, par exemple au niveau du contrôle de rectitude du tube.

La Demanderesse s'est intéressée aux contrôles dimensionnels effectués à l'opération 15.

On considère maintenant un premier mode de réalisation.

L'installation qui réalise les contrôles dimensionnels sur le tube est du type illustré sur la figure 2. Le tube est illustré schématiquement en T.

Dans ce mode de réalisation, le tube avance, coaxialement sur lui-même, selon un mouvement hélicoïdal, qui s'analyse comme une rotation (schématisée par la flèche F1), accompagnée d'une translation selon l'axe longitudinal du tube (schématisée par la flèche F2).

A l'entrée, on prévoit ici deux cinémomètres à laser 1011 et 1012, agencés pour la mesure des vitesses axiale et circonférentielle de passage du tube.

Après les cinémomètres à laser 1011 et 1012, intervient un poste 1200 qui va mesurer le diamètre extérieur du tube. Ensuite, sont prévus deux postes de mesure à ultrasons 1400 et 1500, implantés sous le trajet du tube, tout en étant couplés à celui-ci par une couche d'eau entretenue en continu, que l'on peut appeler "lit d'eau" ("water bed"). A l'autre bout, on peut prévoir deux autres cinémomètres à laser 1091 et 1092, opérant comme les cinémomètres à laser 1011 et 1012. Cette option permet de continuer les mesures en fin de passage du tube, lorsque les cinémomètres à laser 1011 et 1012 ne le voient plus.

L'invention repose sur l'idée que l'on ne prévoit pas de poste spécifiquement dédié au contrôle de traversabilité, dans lequel on ferait passer physiquement un corps de calibrage à l'intérieur du tube. Au contraire, le contrôle de traversabilité va se faire de manière virtuelle. C'est-à-dire qu'il utilise pour l'essentiel des mesures déjà faites sur le tube pour d'autres raisons, ces mesures étant aménagées pour permettre le contrôle de traversabilité.

On décrira maintenant le poste des cinémomètres à laser d'entrée 1011 et 1012.

L'un, par exemple le cinémomètre à laser 1011, envoie un rayon laser vers le tube de l'extérieur, sous un angle choisi, dans un plan radial. En simplifiant, on peut considérer que le rayonnement rétrodiffusé par le tube est mélangé (hétérodyne) au rayonnement brut du laser, pour faire apparaître l'écart de fréquence Doppler dans un capteur optique.

On travaille de préférence en mode dit « Doppler différentiel » avec deux faisceaux laser arrivant symétriquement sur le tube dans un plan radial, tandis que la détection optique se fait selon une perpendiculaire à la surface du tube. Connaissant la longueur d'onde laser $\lambda$ et l'angle d'incidence $\varphi$ des faisceaux laser sur le tube de part et d'autre de la direction de détection, on peut convertir l'écart de fréquence Doppler $f_D$ en une valeur de vitesse axiale V du tube, par exemple en mètres par seconde, selon la formule :

$$V = (f_D\ \lambda\ ) / ( 2 \sin \varphi )$$

L'autre cinémomètre, par exemple 1012, utilise deux faisceaux laser arrivant symétriquement sur le tube dans un plan axial, tandis que la détection optique se fait selon une perpendiculaire à la surface du tube. Comme précédemment, l'écart de fréquence Doppler obtenu se convertit en une valeur de la vitesse circonférentielle du tube, par exemple en mètres par seconde. Dans un mode de réalisation particulier les cinémomètres à laser d'entrée 1011 et 1012 sont articulés sur les matériels LSV-300 de la société allemande Polytec GmbH.

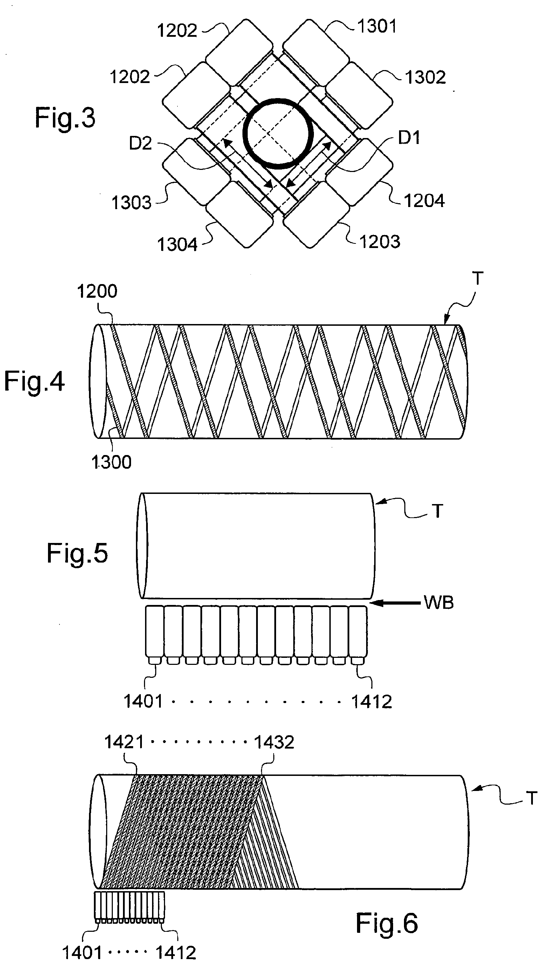

Le poste de mesure de diamètre 1200 est illustré plus en détail sur la figure 3. Il comprend deux émetteurs de lumière 1201 et 1202, placés côte à côte en position connue. Les émetteurs de lumière 1201 et 1202 sont positionnés de manière à établir deux faisceaux lumineux rectilignes sensiblement plans, en direction de détecteurs de lumière respectifs 1203 et 1204, également en position relative connue. On peut engendrer un tel faisceau plan à partir d'un rayon laser étalé par une lentille cylindrique. Les photodétecteurs sont par exemple des barrettes de photodiodes.

Les deux faisceaux lumineux sont positionnés sensiblement adjacents l'un à l'autre, dans un même plan, de manière que

- ces faisceaux lumineux soient interceptés par le tube, du côté où ils sont adjacents (côté intérieur), tandis que
- à l'extérieur, chaque faisceau dépasse toujours le grand diamètre du tube.

Les détecteurs de lumière respectifs 1203 et 1204 sont placés pour "voir" les deux zones, opposées transversalement, où le tube intercepte le faisceau lumineux. Dans l'exemple, le montage des éléments 1201, 1202, 1203 et 1204 possède deux plans de symétrie qui passent par l'axe du tube, mais cela n'est pas impératif. On pourrait d'ailleurs confondre les deux émetteurs de lumière 1201 et 1202 en un seul, et, de même, les deux détecteurs de lumière 1203 et 1204 en un seul.

Ainsi, les détecteurs 1203 et 1204 vont recevoir les parties des faisceaux incidents qui dépassent le tube. Les positions des détecteurs de lumière 1203 et 1204 étant connues, leurs parties non illuminées (ou, par soustraction, leurs parties illuminées) permettent d'accéder à la mesure du diamètre extérieur D1 du tube.

On prévoit de préférence un autre agencement semblable, à angle droit par rapport au premier, constitué des sources de lumière 1301 et 1302, avec à l'opposé les capteurs de lumière 1303 et 1304. Ceci permet d'obtenir un autre diamètre D2, dans la direction perpendiculaire à celle du diamètre D1. Dans un mode de réalisation particulier, le poste de mesure de diamètre 1200 se fonde sur le produit LMD 412-DSP de la société LAP lasers GmbH.

En bref, on obtient ainsi deux mesures de diamètre dans deux directions perpendiculaires l'une à l'autre, situées dans un même plan, en section droite du tube. A chaque fois, la direction de mesure du diamètre est perpendiculaire à la direction du faisceau lumineux parallèle plan utilisé.

Comme le tube avance par un mouvement de translation accompagné d'une rotation, les points de mesure de diamètre vont suivre deux hélices ou spires, comme illustré en 1200 et 1300 sur le tube schématique T de la figure 4. Les deux hélices sont sensiblement à angle droit l'une de l'autre, par rapport à l'axe longitudinal du tube, dès lors que les mesures dans les deux directions perpendiculaires se font en même temps, donc dans un même plan en section droite. (Sinon, elles seraient décalées par rapport à cette situation à angle droit, à proportion du décalage temporel entre les deux mesures). On observera qu'avec deux mesures de diamètre du tube dans un plan radial, on obtient quatre points de la circonférence pour lesquels le diamètre est connu. En effet, une mesure de diamètre vaut pour chacune des extrémités de ce diamètre. Aux deux hélices de la figure 4, il s'ajoute donc, sur la base des mêmes mesures, deux autres hélices qui leur sont diamétralement opposées. Ainsi, la périphérie du tube se trouve couverte par quatre "hélices de diamètre".

Des caractéristiques plus précises de ces mesures sont données dans le tableau 1 ci-après.

| Tableau 1 | |
|---|---|
| *Caractéristique* | *Valeur* |
| précision sur les photodétecteurs | 10 micromètres |
| précision exploitable | 10 micromètres |
| pas d'une spire d'une hélice | 120 mm (Tubes de diamètre extérieur 200 à 400 mm environ) |
| pas de mesure selon l'axe du tube | 1 mm |
| cadence de mesure | 120 points par spire et par laser |
| nombre de points de mesure par spire (2 fois 2 hélices) | 4 * 120 = 480 |

Après le poste 1200 de la figure 2, il est prévu un poste de mesure à ultrasons 1400. Il peut aussi être prévu un autre poste de mesure à ultrasons 1500, en aval. Par exemple, le poste à ultrasons 1400 assure les mesures d'épaisseur du tube, et la recherche de défauts longitudinaux, tandis que le poste à ultrasons 1500 assure les recherches de défauts transverses et obliques.

La mesure d'épaisseur du tube par le poste 1400 va servir aussi pour la mesure de traversabilité.

Un schéma plus détaillé du poste 1400 est illustré sur la figure 5. On y voit une section de tube T schématisée.

Un lit d'eau WB est aménagé en continu entre la partie basse du tube et douze capteurs à ultrasons, référencés 1401 à 1412, placés côte à côte dans la direction de déplacement du tube. Chaque capteur s'étend transversalement selon un arc de cercle en section droite sous le tube. Dans un mode de réalisation particulier, le poste 1400 se fonde sur le produit GRP-PAT-PB de la société General Electric Inspection Technologies (GEIT).

Chaque capteur à ultrasons mesure l'épaisseur de paroi du tube en section droite à son niveau. Le principe de cette mesure par ultrasons est connu. Il utilise l'écart temporel entre l'écho obtenu sur la paroi externe du tube à travers le lit d'eau, et le premier écho qui suit, lequel correspond à une réflexion (ou rétrodiffusion) des ultrasons sur la paroi interne du tube. A un instant donné, on obtient donc 12 points de mesure d'épaisseur, dans 12 sections droites espacées le long de l'axe du tube. Les 12 points de mesure vont, compte tenu de la rotation et de la translation du tube, suivre les douze hélices 1421 à 1432. On a donc 12 "hélices d'épaisseur".

Des caractéristiques plus précises de ces mesures sont données dans le tableau 2 ci-après.

| Tableau 2 | |
|---|---|
| *Caractéristique* | *Valeur* |
| résolution de la mesure par ultrasons | 0,01 mm |
| précision exploitable | 0,03 mm |
| pas d'une spire d'une hélice | 120 mm |
| espacement axial des capteurs à ultrasons | 10 mm |
| nombre de points de mesure par spire | 1100 à 1500 points / spire |

Enfin, le poste des cinémomètres à laser de sortie 1091 et 1092 fonctionne comme le poste des cinémomètres à laser d'entrée 1011 et 1012. Dans un mode de réalisation particulier, les quatre cinémomètres à laser 1011, 1012, 1091 et 1092 sont articulés sur les matériels LSV-300 de la société allemande Polytec GmbH.

Le tube étant rigide, les mesures de vitesse axiale en 1011 et 1091 doivent être les mêmes au même instant. On connaît donc en temps réel la vitesse de déplacement axial du tube, avec précision. Une façon de faire consiste à émettre un top chaque fois que le tube a avancé de 20 mm, par exemple.

Par contre, les mesures de vitesse circonférentielle en 1012 et 1092 peuvent être légèrement différentes, car le diamètre du tube au niveau du poste 1092 peut être un peu différent de son diamètre au niveau du poste 1012. Par ailleurs, on connaît la position de ces postes 1011, 1012, 1091 et 1092 le long de l'axe de translation du tube. Si l'on a mémorisé toutes les mesures de vitesse circonférentielle des postes 1012 et 1092 pour un tube, il est possible, a posteriori, de construire des couples de deux valeurs mesurées de vitesse circonférentielle qui correspondent à la même section droite du tube.

D'un autre point de vue, même si le diamètre du tube au niveau du poste 1092 peut être un peu différent de son diamètre au niveau du poste 1012, il reste vrai par contre que la vitesse angulaire du tube au niveau du poste 1092 est la même qu'au niveau du poste 1012, le tube étant rigide. Et la tolérance de diamètre est connue. Par conséquent, on peut partir de la moyenne des deux mesures de vitesse circonférentielle obtenues en 1012 et 1092. On en déduit la vitesse angulaire compte tenu du diamètre et de la tolérance de diamètre. C'est acceptable compte-tenu du fait que la vitesse angulaire varie peu d'une position angulaire de mesure à la suivante, à cause de l'inertie du tube, et ceci sur un tour complet. Cela permet, en temps réel, d'émettre un top chaque fois que le tube a fait un tour complet.

On part maintenant de ce cas où les postes 1011, 1012, 1091 et 1092 fournissent en temps réel d'une part un top « de rotation » chaque fois que le tube a fait un tour complet, et d'autre part un top « de translation » chaque fois que le tube a avancé de 20 mm.

La position des sections droites de mesure associées aux capteurs à ultrasons 1401 à 1412 est connue. On connaît également la distance axiale entre les postes 1200 et 1400 (plus exactement la distance entre deux sections droites de référence respectives des postes 1200 et 1400). Elle est ici de 1800 mm. Pour des raisons techniques, le plan de la section droite de travail du poste 1200 (pour la mesure de diamètre) peut être soit le plan défini par le trait tireté qui remonte à droite dans le poste 1200, soit le plan du trait tireté qui remonte à gauche. Le choix du plan dépend du diamètre nominal du tube. Dans les deux cas, la section droite de mesure de diamètre est connue avec précision.

On connaît donc bien le décalage axial entre les sections droites associées aux capteurs à ultrasons 1401 à 1412, et la section droite des mesures de diamètre.

En utilisant aussi les tops de rotation et de translation, on peut donc recaler approximativement les mesures de diamètre et d'épaisseur par rapport à la surface du tube. Autrement dit, on peut recaler approximativement les quatre "hélices de diamètre" et les 12 "hélices d'épaisseur" par rapport au tube.

Cependant, pour pouvoir recaler exactement les quatre "hélices de diamètre" et les 12 "hélices d'épaisseur", il serait nécessaire de disposer d'un point de référence sur le tube, que l'on puisse rapporter à ces deux groupes d'hélices. Ce n'est pas le cas ici.

Il faudrait aussi déclencher les temps exacts des tirs ultrasonores d'après les tops de rotation et de translation. Autrement dit, il faudrait que les horloges qui déclenchent les mesures de diamètre, et les mesures d'épaisseur, soient synchronisées sur le temps réel. La Demanderesse a observé que ce n'est pas nécessaire, car, sans cette synchronisation, on peut déjà travailler avec une erreur de positionnement inférieure à 1 mm dans les deux directions.

Par contre, la vitesse axiale de déplacement du tube est connue en temps réel avec précision. Et sa vitesse circonférentielle (ou angulaire) est également connue avec précision, en valeur moyenne sur un tour.

La distance que parcourt le tube d'un poste au suivant est connue. Sa vitesse axiale est connue. On peut donc déterminer le temps Tx mis par le tube pour aller d'un poste à l'autre. On sait donc de combien il faut décaler dans le temps les 4 "hélices de diamètre", pour les recaler sur la même section droite du tube que les 12 "hélices d'épaisseur". Par contre, ceci fait, on n'est pas sûr du recalage angulaire de toutes ces hélices dans la section droite, puisque la vitesse angulaire du tube a pu varier pendant le temps Tx.

Idéalement, il faudrait que, dans la section droite du tube, une valeur mesurée du diamètre se situe exactement selon la même direction radiale qu'une valeur mesurée de l'épaisseur de paroi, pour pouvoir faire la différence, et obtenir ainsi le diamètre intérieur du tube. La Demanderesse a observé qu'il reste possible de calculer le diamètre intérieur du tube à partir de valeurs du diamètre extérieur et de l'épaisseur qui sont légèrement décalées l'une de l'autre, angulairement et/ou axialement, en utilisant le fait que la surface du tube est continue. Autrement dit, la Demanderesse a observé que l'on peut faire le calcul de diamètre intérieur, à condition de disposer de points de mesure de diamètre extérieur et de points de mesure d'épaisseur qui sont suffisamment proches les uns des autres, pour que les variations locales du diamètre extérieur du tube, de son épaisseur de paroi et de son excentricité, restent suffisamment faibles par rapport à la précision désirée pour la mesure du diamètre intérieur. Dans une installation particulière, la Demanderesse a procédé à un étalonnage de l'installation à partir d'un tube dont toutes les mesures étaient connues. Elle a ensuite recherché l'effet de la dispersion circonférentielle sur la dispersion dans le calcul de diamètre intérieur, laquelle s'est avérée compatible avec la précision souhaitée.

Dans un exemple, on considère un tube de 12 m parcouru au pas de 120 mm avec 12 spires par révolution. On obtient un total de 12 * 12000 / 120 = 1200 spires en mesure d'épaisseur.

En mesure de diamètre, on va disposer d'une série ordonnée de valeurs du diamètre intérieur $D_{int}$ du tube, couvrant celui-ci avec une haute résolution. On a par exemple 360 valeurs $D_{int}$ par spire, pour 400 spires par tube.

Une première manière d'évaluer la traversabilité du tube par un cylindre de diamètre $D_{drift}$ sera maintenant décrite. Le processus s'effectue en principe sur un tube qui n'est pas encore muni de ses connexions/filetages d'extrémité.

Tout d'abord, on découpe virtuellement le tube en une succession de tronçons. De préférence, ces tronçons se recouvrent par exemple au moins à 50 %, de préférence jusqu'à 90 %.

Ensuite, on met en oeuvre un processus de calcul et de traitement pour chacun des tronçons virtuels du tube. Ce processus peut faire intervenir tout ou partie des opérations suivantes :

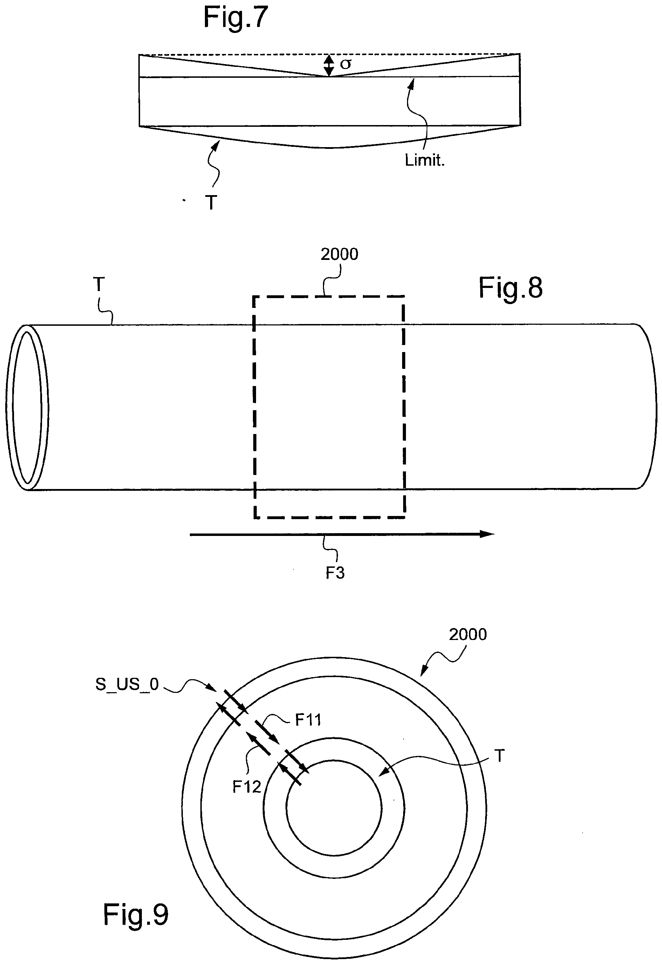

1. Récupérer le jeu ordonné de valeurs du diamètre intérieur $D_{int}$ qui correspondent au tronçon considéré.
2. pour chaque spire, comparer ses diamètres intérieurs, pour déterminer la valeur la plus faible, ou diamètre intérieur minimum. (Cette opération, optionnelle ici, peut servir plus bas).
3. Corriger les valeurs de diamètre intérieur en fonction d'un défaut de rectitude du tube, noté $\sigma$. Cette valeur $\sigma$ peut correspondre à la flèche maximale admissible pour le tronçon de tube T, compte tenu des normes de fabrication applicables, comme illustré sur la figure 7. Pour des tubes pétroliers, la norme précitée distingue la flèche $\sigma_{center}$ pour les tronçons intermédiaires, et la flèche $\sigma_{ends}$ pour les tronçons d'extrémité.
En variante, on pourrait prendre une valeur $\sigma$ mesurée sur le tronçon en cours, lors des tests de l'opération 13 de la figure 1.
4. pour chaque spire, on prend son diamètre intérieur minimum, et

- si le diamètre intérieur minimum $D_{min}$ diminué du défaut de rectitude $\sigma$ (incorporant de préférence une petite marge) est supérieur (ou égal) au diamètre $D_{drift}$, alors cette spire est traversable ; sinon cette spire est notée comme l'une des positions où le corps de calibrage serait coincé.

5. Si toutes les spires sont traversables (avec $D_{min} - \sigma \geq D_{drift}$ partout), alors le corps de calibrage passe ; sinon, il ne passe pas, et l'on connaît (par l'opération 4.) les positions des spires où le corps de calibrage serait coincé.
6. En variante, ou en complément, on peut aussi déterminer le corps de calibrage le plus gros qui traverse le tube. A cet effet, on compare les valeurs $D_{min} - \sigma$ pour toutes les spires du tube. La valeur la plus faible de $D_{min} - \sigma$ représente le plus grand diamètre de corps de calibrage qui peut passer.

Ainsi, $D_{min} - \sigma - D_{drift}$ sert de grandeur critique, représentative de la marge de passage du corps de calibrage à l'intérieur de chaque tronçon du tube.

Ce qui précède concerne uniquement le passage du corps de calibrage en diamètre. Il a en outre une certaine longueur, qui peut plus ou moins poser problème, en fonction des défauts de rectitude du tube. La longueur et le recouvrement des tronçons sont choisis pour tenir compte de la longueur du corps de calibrage.

Autrement dit, on connaît la distribution des diamètres intérieurs du tube dans l'espace, le long du tube, mais sans connaître les positions exactes des centres des spires ayant ces diamètres. Le test de rectitude API a vérifié que le tube possède une courbure inférieure à la courbure maximale admissible. On peut donc partir de cette courbure maximale admissible pour compenser le fait que l'on ne connaît pas les positions exactes des centres des spires. Les lignes « Limit » de la figure 7 indiquent les limites en diamètre pour un passage en ligne droite, la courbure du tube étant très exagérée.

Le tube est considéré comme traversable dans son ensemble si tous les tronçons examinés sont traversables par le corps de calibrage. Le tube est considéré comme non traversable si un tronçon examiné bloque franchement. Si un ou plusieurs tronçons examinés sont à la limite du coincement, le tube est "à vérifier".

On considère maintenant un second mode de réalisation.

Celui-ci peut s'appliquer aux installations de production de tubes dans lesquelles le tube T traverse une boîte à eau 2000, illustrée par un cadre en trait tireté sur la figure 8. Dans ce cas, le tube est généralement soumis à un mouvement de translation pure, tel que défini par la flèche F3, quoiqu'un mouvement hélicoïdal soit également possible.

La figure 9 montre le principe de la mesure dans la boîte à eau 2000. On considère une sonde à ultrasons, notée par convenance S_US_0. Le tube T passe à l'intérieur de la boîte à eau 2000. La sonde envoie un faisceau impulsionnel d'ultrasons, sensiblement radialement vers le tube (Flèche 11 aller). Il s'ensuit une première réflexion des ultrasons par la paroi externe du tube (Flèche 11 retour). D'où un premier faisceau réfléchi en retour vers la sonde (écho de paroi externe). Une partie du faisceau incident d'ultrasons pénètre le tube (flèche 12 aller). Il s'ensuit une seconde réflexion des ultrasons par la paroi interne du tube (Flèche 12 retour). Et une partie de ce second faisceau réfléchi retraverse la paroi externe pour retourner vers la sonde S_US_0. C'est un premier écho de paroi interne.

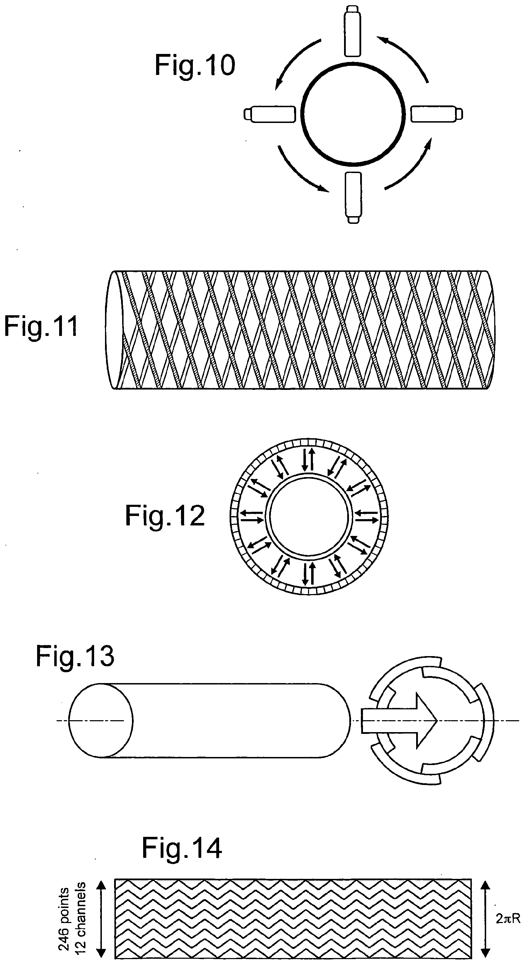

En pratique, on procède à ce type de mesure sur toute la périphérie du tube. Cela peut se faire avec des têtes à ultrasons tournantes, par exemple au nombre de quatre, comme illustré sur la figure 10. C'est une boîte à eau de type dit "ROT180VIS" de GEIT. Dans ce cas, du fait que le tube avance, on obtient encore des mesures le long d'hélices, comme indiqué schématiquement sur la figure 11.

L'axe de symétrie principal du faisceau d'ultrasons émis est connu, et en principe perpendiculaire à la couronne de sondes ultrasonores, tels que S_US_0. A partir du temps de propagation aller-retour pour le premier écho de paroi interne perçu par la sonde ultrasonore S_US_0, on peut déterminer la position du point de réflexion sur la paroi interne du tube, par rapport à un point de référence de la sonde S_US_0. C'est une position en trois dimensions, compte-tenu du mouvement du tube. Ensuite, la position du point de réflexion sur la paroi interne du tube peut être rapportée à un point origine dans l'espace, par exemple le centre de la couronne de sondes ultrasonores.

On préfère actuellement utiliser des réseaux phasés ("phased arrays") de sondes à ultrasons encerclant le tube. Le principe est illustré sur la figure 12. C'est par exemple une boîte à eau de type dit "ROWA 240 SK 12957" de GEIT. En effectuant un balayage de l'excitation des sondes à ultrasons, on obtient des mesures techniquement semblables à celles des têtes à ultrasons tournantes.

En pratique, les sondes ultrasonores peuvent être réparties selon des arcs de cercles, en décalage alterné le long de l'axe du tube, et qui se recouvrent partiellement (Fig 13). Et, notamment pour éviter des interférences entre faisceaux d'ultrasons, on les excite également en alterné. Il s'ensuit une répartition en dents de scie des points de mesure sur la périphérie du tube, comme l'illustre la figure 14.

C'est ce mode de réalisation que l'on décrira maintenant plus en détail.

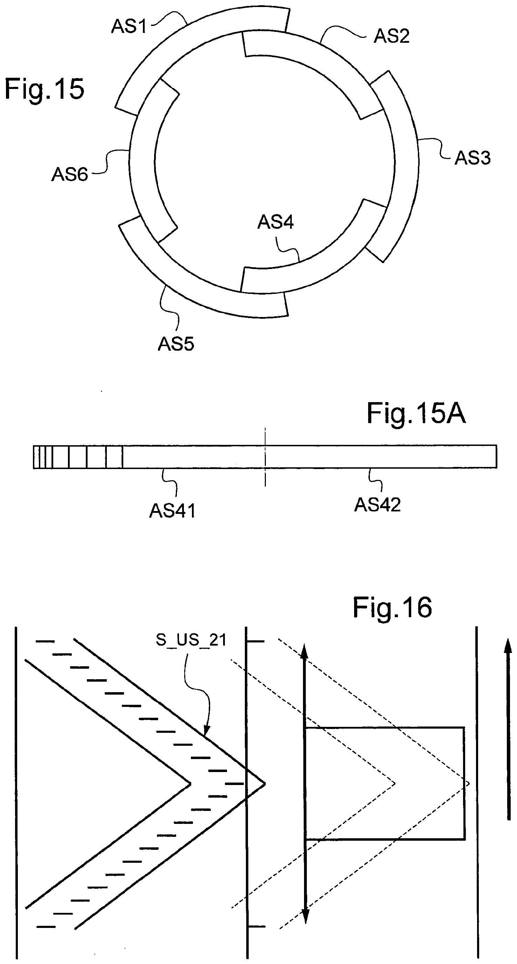

La figure 15 illustre les positions de six arcs de capteurs AS1 à AS6, répartis autour de la circonférence du tube, avec recouvrement. Là aussi, les arcs AS2, AS4 et AS6 sont représentés à l'intérieur, radialement, des arcs AS1, AS3 et AS5. C'est une convention de dessin pour montrer leur recouvrement. En fait, les arcs AS2, AS4 et AS6 sont positionnés sur le même rayon que les arcs AS1, AS3 et AS5, mais décalés axialement de ceux-ci.

Chaque arc de capteurs, comme AS4, comprend 2 demi-arcs de capteurs AS41 et AS42, comprenant 64 éléments capteurs chacun. Des capteurs virtuels sont définis en combinant les signaux de plusieurs capteurs physiques. On va travailler par exemple selon plusieurs modes utilisant de 14 à 28 capteurs virtuels par demi-arc, soit 28 à 56 capteurs virtuels par arc complet. On note N le nombre de capteurs virtuels par arc complet.

Ainsi, autour de la circonférence du tube, on pourra mettre en œuvre jusqu'à six fois N transducteurs virtuels, ce qui correspond à 336 valeurs mesurées pour N = 56. En fait, les arcs se recouvrent un peu le long de la circonférence du tube. Le nombre de valeurs mesurées différentes est donc un peu inférieur.

Il est maintenant fait référence à la figure 15A. Elle détaille l'arc de sondes ultrasonores AS4, qui est décomposé en deux parties AS41 et AS42. Les données de ces deux parties sont recueillies sur un seul et même canal de mesure. Ces deux parties AS41 et AS42 forment les deux fois 64 éléments déjà cités pour N transducteurs virtuels.

En regard de cette figure 15A, la figure 16 indique la répartition des tirs impulsionnels d'énergie ultrasonore, en fonction du temps, et par conséquent du déplacement longitudinal du tube. La vitesse longitudinale est typiquement d'un mètre/seconde. Ceci fait mieux comprendre la structure en dents de scie des mesures déjà citées. On observe que la pointe de la dent de scie correspond au transducteur ultrasonore de rang médian, parmi les N transducteurs virtuels.

Dans ce second mode de réalisation, les mesures de diamètre extérieur et d'épaisseur du tube sont par construction faites sensiblement au même point, ou sur des points très voisins. Dans tous les cas, la position de chaque point de réflexion des ultrasons sur la paroi interne du tube peut être rapportée à un point origine dans l'espace, par exemple le centre de la couronne de sondes ultrasonores, ou le centre de rotation des têtes à ultrasons tournantes, ou le centre des arcs de capteurs.

Dans ce cas, on peut naturellement utiliser le processus de calcul et de traitement décrit plus haut, en référence à la figure 7. Mais il devient possible de procéder autrement, comme on le verra maintenant.

Dans les différents cas décrits ci-dessus pour le second mode de réalisation, on peut ramener la mesure à un ensemble de M spires, pour un tronçon de tube. On considère un indice i (de 0 à M-1) qui est un numéro de spire, lequel correspond à un temps, et par conséquent à un déplacement axial du tube (accompagné éventuellement d'un déplacement angulaire du tube).

A partir des mesures brutes par ultrasons dans la boîte à eau (ou équivalent), on dispose de N mesures par spire. On considère un indice j (de 0 à N-1) qui est un numéro du point de mesure dans la spire. En toute rigueur, dans un cas comme celui de la boîte à eau avec des têtes à ultrasons tournantes de la figure 10, ou bien des réseaux phasés, les différentes mesures d'une spire sont obtenues séquentiellement dans le temps (au moins en partie). On peut donc aussi leur associer un temps, et par conséquent un déplacement axial du tube (accompagné éventuellement d'un déplacement angulaire du tube). Quel que soit le type de mesures par ultrasons, on connaît la correspondance entre l'indice j et ce temps, ainsi que l'angle de la mesure dans la section droite du tube.

On dispose donc au départ de mesures de position Mij de la paroi interne du tube, qui peuvent être exprimées dans le repère de la couronne de capteurs à ultrasons, par exemple dans un repère orthonormé dont l'origine est le centre de la couronne de capteurs à ultrasons. Ce sont des mesures 3D, mais qui peuvent être ramenées à des mesures 2D pour une même spire, car les mesures d'une même spire sont dans une même section droite du tube, à peu de choses près.

On comprend que la spire s'enroule le long du tube, comme une hélice. On s'affranchit de la petite dimension de la spire le long de l'axe du tube, en la projetant orthogonalement sur un plan perpendiculaire à l'axe du tube. Cela consiste à omettre, pour les points de la spire, la coordonnée selon l'axe longitudinal du tube. Le numéro de la spire suffit pour définir la position de ses points selon l'axe longitudinal du tube, à la précision souhaitée.

Pour chaque spire i du tube, on va d'abord déterminer la position d'un point central Ci, par exemple dans le repère de la couronne de capteurs à ultrasons. A cet effet, on recherche le centre du cercle qui s'ajuste le mieux sur les points de la spire considérée. Autrement dit, i étant fixe, on cherche le point Ci pour lequel on a un minimum de

$$j\Sigma\ (Mij - Ci)^2$$

où Mij et Ci sont des vecteurs de position dans le plan de projection.

Ensuite, on convertit les vecteurs de mesure Mij pour qu'ils soient rapportés à ce centre Ci. On obtient ainsi un tableau de vecteurs de mesure noté Rij (i = numéro de la spire, j = numéro du point), pour lesquelles, dans chaque spire, la position relative de chaque point de la surface interne du tube est rapportée au centre Ci.

S'il y a N points d'enregistrement de la surface interne du tube à chaque spire (avec N pair), la surface interne du tube peut être représentée par N/2 segments traversants que l'on appellera aussi « quasi-diamètres ». Dans l'espace, un segment traversant est défini par la position de ses extrémités. Le segment de rang k possède une extrémité notée Rik, et une autre extrémité, sensiblement à l'opposé, notée Ri(N/2+k-1). Il passe par le centre Ci. Ainsi, le segment traversant est défini par le demi-segment qui va de Rik à Ci, suivi du demi-segment qui va de Ci à Ri(N/2+k-1). Les deux demi-segments ne sont pas exactement alignés l'un avec l'autre, sauf lorsque les deux extrémités sont exactement opposées l'une à l'autre.

En notation simplifiée, le segment traversant de rang k est noté Dik (avec i = numéro de la spire, k = rang du segment, allant de 0 à N/2 - 1). Ainsi, chaque quasi-diamètre Dik relie deux points de la surface interne du tube positionnés sensiblement à 180° l'un de l'autre, en passant par le centre de spire Ci.

On considère ensuite une suite de quasi-diamètres qui sont sensiblement parallèles les uns aux autres, sur toutes les spires, par exemple à partir d'un premier quasi-diamètre dans la première spire. Et l'on répète cela avec toutes les directions diamétrales existant dans la première spire. (Même si un quasi-diamètre est une ligne légèrement brisée, on peut quand même lui associer une direction, dite direction diamétrale).

Autrement dit, on procède à une décomposition du tronçon de tube en plusieurs sous-ensembles de quasi-diamètres, dont chacun est associé à une direction diamétrale respective. Chaque sous-ensemble contient les quasi-diamètres parallèles les uns aux autres, sur l'ensemble des spires, et à raison d'un par spire, de telle manière que l'on puisse associer chaque quasi-diamètre à son numéro de spire. Le plus simple est d'utiliser un tableau où les quasi-diamètres apparaissent dans l'ordre des spires. C'est ce que l'on appelle ici un « plan 2D ». Un quasi diamètre est défini par les positions de ses extrémités [Rik , Ri(N/2+k-1)] dans le plan sur lequel on projette la spire à laquelle il appartient, et par son numéro i (ou autre identifiant) de spire.

Si le tronçon de tube étudié a une longueur de M spires, on aura un jeu (noté Pn, n = numéro du plan, de 0 à N/2) de N/2 plans 2D, dont chacun comprend M quasi-diamètres sensiblement parallèles les uns aux autres.

Par exemple, le plan $P_0$ sera composé du quasi-diamètre $D_{00}$ dans la spire 0 (i=0), de $D_{1j}$ qui est le quasi-diamètre sensiblement parallèle à $D_{00}$ dans la spire 1, ..., de Dij' qui est le quasi-diamètre sensiblement parallèle à $D_{00}$ dans la spire i, ..., de $D_{Mj''}$ qui est le quasi-diamètre sensiblement parallèle à $D_{00}$ dans la spire M. Les quasi-diamètres sont ainsi empilés en superposition, dans l'ordre des spires (le long de l'axe longitudinal du tube), en respectant la position de leurs extrémités dans chacun des plans de projection des spires.

Autrement dit, on va retrier le tableau de données Rij pour y mettre en correspondance les quasi-diamètres qui sont sensiblement parallèles entre eux, d'une spire à la suivante, pour toutes les spires. Il est rappelé que l'on connaît la correspondance entre l'indice j et la direction radiale selon laquelle est faite la mesure, dans la section droite du tube.

Dans chacun des plans 2D, on cherche le trapèze qui s'inscrit tangentiellement dans les quasi-diamètres, côté intérieur. Une manière simple de le faire est la suivante :

- Premier côté latéral du trapèze

  - Déterminer une première ligne droite qui relie une première extrémité du quasi-diamètre de la première spire, à l'extrémité située du même côté dans la dernière spire ;
  - Si cette première ligne droite passe à l'intérieur de tous les autres quasi-diamètres, entre la première spire de la dernière, elle est retenue ;
  - Sinon, on la déplace vers l'intérieur, de sorte qu'elle passe à l'intérieur de tous les quasi-diamètres.

- Second côté latéral du trapèze

  - Déterminer une seconde ligne droite qui relie la seconde extrémité (opposée à la première) du quasi-diamètre de la première spire, à l'extrémité située du même côté dans la dernière spire ;
  - Si cette seconde ligne droite passe à l'intérieur de tous les autres quasi-diamètres, entre la première spire de la dernière, elle est retenue ;
  - Sinon, on la déplace vers l'intérieur, de sorte qu'elle passe à l'intérieur de tous les quasi-diamètres.

La première et la seconde ligne droite forment donc les deux côtés latéraux du trapèze, que l'on peut fermer aux extrémités par deux côtés parallèles (virtuellement).

On obtient alors un faisceau ou carrousel de trapèzes couvrant progressivement les différentes orientations autour de l'axe longitudinal du tronçon de tube.

Ensuite, à partir des ces différents trapèzes, on bénéficie d'une forme à génératrices droites (les côtés latéraux des trapèzes) qui s'inscrit à l'intérieur de la surface intérieure du tronçon de tube. Et on détermine si le corps de calibrage passe dans cette forme à génératrices droites. Il suffit à cet effet d'examiner si et comment la section droite du corps de calibrage cylindrique passe par chacune des deux extrémités de la forme à génératrices droites. En effet, pour chaque trapèze, le minimum de passage est à l'une des extrémités.

Il se peut que la section droite du corps de calibrage passe aux deux bouts, mais que la position de son centre lorsqu'elle passe à un bout soit décalée par rapport à la position de son centre lorsqu'elle passe à l'autre bout. On note $\alpha$ l'angle de la ligne qui joint ces deux centres, par rapport à l'axe du tube. On prend alors une section oblique du corps de calibrage qui est inclinée selon l'angle $\alpha$ par rapport à la section droite. Elle est donc elliptique. Et l'on refait, avec cette section oblique elliptique, le test de passage aux deux extrémités de la forme à génératrices droites. On peut devoir réitérer cela plusieurs fois, par exemple jusqu'à ce que le décalage des centres ne varie plus.

Le test de passage aux extrémités se fait avec une marge de sécurité, que l'on peut déterminer expérimentalement. Elle est a priori nettement plus faible que la marge $\sigma$ précitée. La grandeur critique du test comprend ici les distances entre la forme à génératrices droites et la section droite (ou oblique) du corps de calibrage, avec la marge de sécurité.

A partir de là, on peut établir le diagnostic du test de traversabilité du tube par le corps de calibrage, tronçon par tronçon. Chaque tronçon peut avoir la longueur du corps de calibrage, et les tronçons se recouvrent sur au moins la moitié de leur longueur. La longueur des tronçons et leur taux de recouvrement peuvent être aménagés.

Comme précédemment :

- le recouvrement des tronçons permet de prendre en compte la légère courbure éventuelle du tube. Il s'effectue par exemple au moins à 50 %, de préférence jusqu'à 90 %.
- Le tube est considéré comme traversable dans son ensemble si tous les tronçons examinés sont traversables par le corps de calibrage. Le tube est considéré comme non traversable si un tronçon examiné bloque franchement. Si un ou plusieurs tronçons examinés (ou les transitions entre eux) sont à la limite du coincement, le tube est "à vérifier".

Le processus ci-dessus détermine en sortie :

1/ si le corps de calibrage passe ou non dans le tube (sanction « passe » ou « ne passe pas »)
2/ dans le cas d'un blocage, les positions du blocage (numéro de spire et identifiant de tronçon, le cas échéant) ;
3/ et dans tous les cas, le plus grand diamètre de corps de calibrage qui peut passer dans le tube testé.

Ce processus permet de diminuer significativement les calculs d'analyse dans l'espace 3D, tout en assurant la prise en compte de chaque détail d'information de la forme interne du tube. Il nécessite très peu de temps de calcul. Ceci est primordial car le traitement a vocation à être appliqué en usine en temps réel, à la cadence de production.

Dans une vue générique, le processus ci-dessus part des coordonnées de points de la surface intérieure du tube, tels que mesurés par exemple par ultrasons. Il recherche une forme à génératrices droites qui s'inscrive à l'intérieur de la surface intérieure du tube. Et il détermine si le corps de calibrage passe dans cette forme à génératrices droites.

Dans le mode de réalisation décrit, cela s'effectue avantageusement en condensant les données 3D de mesure sous forme de données 2D définies par spires et rapportées à un point central de chaque spire, puis en retriant ces données 2D en sous ensembles correspondant chacun à des quasi-diamètres sensiblement parallèles les uns aux autres. Ensuite, dans chaque sous-ensemble, on recherche deux droites qui affleurent intérieurement les extrémités des quasi-diamètres, de part et d'autre. Sur tous les sous-ensembles, cela fournit une forme à génératrices droites, à partir de laquelle on peut déterminer si le corps de calibrage passe, ne passe pas, ou bien est « limite ».

Selon l'art antérieur, on travaille généralement sur un tube muni de ses connexions/filetages d'extrémité. Par contre, les modes de réalisation de l'invention décrits plus haut opèrent en principe sur un tube qui n'est pas encore muni de ses connexions/filetages d'extrémité. Toutefois, il serait envisageable de les utiliser sur un tube muni de ses connexions/filetages d'extrémité. Dans ce cas, on pourrait se contenter d'examiner des tronçons aux deux extrémités du tube.

## Revendications

1. Procédé d'aide au contrôle de tubes en acier en production, comprenant les étapes suivantes :

a. acquérir des données de mesure, représentatives de mesures physiques faites de l'extérieur sur la géométrie d'un tube en acier,
b. à partir de ces données de mesure, générer des données de mesure converties, formant une représentation tridimensionnelle par pixels de la paroi interne dudit tube, sur une zone longitudinale du tube, ladite représentation tridimensionnelle étant rapportée à un système de coordonnées choisi, ayant un point origine et un axe repérés par rapport au tube,
c. préparer des données de gabarit, représentatives de la géométrie hors tout d'un corps de calibrage, ces données de gabarit étant applicables dans ledit système de coordonnées choisi,
d. considérer un premier tronçon du tube, pour lequel on dispose de données de mesure converties, et déterminer, à partir de ces données de mesure converties et des données de gabarit, une grandeur critique, représentative de la marge de passage du corps de calibrage à l'intérieur de ce tronçon du tube,
e. répéter sélectivement l'opération d/ pour d'autres tronçons de tube, décalés les uns par rapport aux autres avec recouvrement, et
f. établir un diagnostic de la traversabilité de ladite zone longitudinale du tube par le corps de calibrage, à partir des grandeurs critiques obtenues aux étapes d/ et e/, et des positions relatives des tronçons de tubes successifs,

**caractérisé en ce que** :

- à l'étape c/, les données de gabarit comprennent un diamètre extérieur hors tout du corps de calibrage,
- l'étape d/ comprend les sous-étapes suivantes :

d1. déterminer un cylindre inscrit à l'intérieur du tronçon de tube, et
d2. déterminer l'écart entre le diamètre du cylindre inscrit et le diamètre hors tout du corps de calibrage, en tant que grandeur critique,

et
- l'étape e/ comprend, pour chaque paire de tronçons de tubes adjacents, l'établissement de la possibilité du passage d'un tronçon au suivant à partir de ladite grandeur critique, de l'écart angulaire entre les axes des deux tronçons de tube, et d'au moins une dimension longitudinale du corps de calibrage.

2. Procédé selon la revendication 1, **caractérisé en ce que** les données de mesure comprennent des mesures relatives à la circonférence externe du tube et des mesures relatives à son épaisseur de paroi, faites sur un tube dont le mouvement comprend une translation longitudinale.

3. Procédé selon la revendication 2, **caractérisé en ce que** les mesures relatives à la circonférence externe du tube sont faites par capteurs laser, tandis que les mesures relatives à son épaisseur de paroi sont faites par capteurs à ultrasons, couplés au tube par un milieu de transmission liquide.

4. Procédé selon la revendication 3, dans lequel les capteurs à ultrasons sont montés flottants pour rester en coopération avec le tube, **caractérisé en ce qu'**il est prévu un système de mesure de la position relative des capteurs laser par rapport aux capteurs à ultrasons.

5. Procédé selon la revendication 2, **caractérisé en ce qu'**à la fois les mesures relatives à la circonférence externe du tube et les mesures relatives à son épaisseur de paroi sont faites par capteurs à ultrasons coopérant avec une boîte à eau traversée par le tube.

6. Procédé selon l'une des revendications précédentes, **caractérisé en ce que** :

- l'étape d/ comprend la détermination d'une forme à génératrices droites qui s'inscrit à l'intérieur de la surface intérieure du tube, tronçon par tronçon, et
- l'étape e/ comprend le test de ce que le corps de calibrage passe dans la forme à génératrices droites de chaque tronçon considéré.

7. Dispositif d'aide au contrôle dimensionnel de tubes en acier en production, comprenant :

- au moins une station de mesure agencée pour acquérir des données de mesure, représentatives de mesures physiques faites de l'extérieur sur la géométrie d'un tube en acier, et
- un système informatique capable :

• de stocker des données de gabarit, représentatives de la géométrie hors tout d'un corps de calibrage, ces données de gabarit étant applicables dans ledit système de coordonnées choisi,
• à partir des données de mesure, de générer des données de mesure converties, formant une représentation tridimensionnelle par pixels d'au moins deux tronçons de tube, décalés l'un par rapport à l'autre avec recouvrement, cette représentation tridimensionnelle étant rapportée à un système de coordonnées choisi, ayant un point origine et un axe repérés par rapport au tube,
• pour chaque tronçon du tube, de déterminer, à partir de ses données de mesure converties et des données de gabarit, une grandeur critique, représentative de la marge de passage du corps de calibrage à l'intérieur de ce tronçon du tube, et
• d'établir un diagnostic de la traversabilité des tronçons de tube par le corps de calibrage, à partir desdites grandeurs critiques, et des positions relatives des tronçons de tubes.

**caractérisé en ce que** :

- les données de gabarit comprennent un diamètre extérieur hors tout du corps de calibrage,
- la détermination de la grandeur critique comprend la recherche d'un cylindre inscrit à l'intérieur du tronçon de tube, et la détermination de l'écart entre le diamètre du cylindre inscrit et le diamètre hors tout du corps de calibrage, en tant que grandeur critique,

et
l'établissement du diagnostic comprend, pour une paire de tronçons de tubes adjacents, l'établissement de la possibilité du passage d'un tronçon au suivant à partir de ladite grandeur critique, de l'écart angulaire entre les axes des deux tronçons de tube, et d'au moins une dimension longitudinale du corps de calibrage.

8. Dispositif selon la revendication 7, **caractérisé en ce que** les données de mesure comprennent des mesures relatives à la circonférence externe du tube et des mesures relatives à son épaisseur de paroi, faites sur un tube dont le mouvement comprend une translation longitudinale.

9. Dispositif selon la revendication 8, **caractérisé en ce qu'**il comprend une station de mesure laser pour les mesures relatives à la circonférence externe du tube, et un poste de capteurs à ultrasons, couplés au tube par un milieu de transmission liquide, pour les mesures relatives à l'épaisseur de paroi du tube.

10. Dispositif selon la revendication 9, dans lequel les capteurs à ultrasons sont montés flottants pour rester en coopération avec le tube, **caractérisé en ce qu'**il est prévu en outre un système de mesure de la position relative des capteurs laser et des capteurs à ultrasons.

11. Dispositif selon la revendication 10, **caractérisé en ce qu'**à la fois les mesures relatives à la circonférence externe du tube et les mesures relatives à son épaisseur de paroi sont faites par une station de mesure comprenant des capteurs à ultrasons coopérant avec une boite à eau traversée par le tube.

12. Dispositif selon l'une des revendications 7 à 11, **caractérisé en ce que** le système informatique est agencé pour déterminer une forme à génératrices droites qui s'inscrit à l'intérieur de la surface intérieure du tube, tronçon par tronçon, et tester si le corps de calibrage passe dans la forme à génératrices droites de chaque tronçon considéré.

13. Dispositif selon la revendication 12, **caractérisé en ce que** le système informatique est agencé pour condenser les données 3D de mesure sous forme de données 2D définies par spires et rapportées à un point central de chaque spire, puis pour retrier ces données 2D en sous ensembles correspondant chacun à des quasi-diamètres sensiblement parallèles les uns aux autres.

## Patentansprüche

1. Hilfsverfahren zur Kontrolle von Stahlrohren bei der Produktion, umfassend die folgenden Schritte:

a. Erfassen von Messdaten, die für physikalische Messungen von außen an der Geometrie eines Stahlrohres repräsentativ sind,
b. ausgehend von diesen Messdaten Erzeugen von konvertierten Messdaten, die eine dreidimensionale Darstellung durch Pixel der Innenwand des besagten Rohres über einen Längsbereich des Rohres bilden, wobei sich die besagte dreidimensionale Darstellung auf ein ausgewähltes Koordinatensystem bezieht, das einen Ursprungspunkt und eine in Bezug auf das Rohr befindliche Achse aufweist,
c. Vorbereiten der Datenvorlagen, die für die Gesamtgeometrie eines Kalibrierkörpers repräsentativ sind, wobei diese Datenvorlagen im besagten ausgewählten Koordinatensystem anwendbar sind, Berücksichtigen eines ersten Rohrabschnitts, für den konvertierte Messdaten verfügbar sind, und Bestimmen, auf Grundlage dieser konvertierten Messdaten und der Datenvorlagen einer kritischen Größe, die repräsentativ für den Durchlassspielraum des Kalibrierkörpers im Inneren des Rohrabschnitts ist,
d. selektives Wiederholen des Vorgangs d/ für andere Rohrabschnitte, die im Verhältnis zueinander versetzt sind mit Überlappung, und
e. Stellen einer Diagnose zur Durchlässigkeit der genannten Längszone des Rohres durch den Kalibrierkörper auf der Grundlage der in den Schritten d/ und e/ erhaltenen kritischen Größen und der relativen Positionen der aufeinanderfolgenden Rohrabschnitte, **dadurch gekennzeichnet, dass**:

- - in Schritt c/ die Datenvorlagen einen Gesamtaußendurchmesser des Kalibrierkörpers umfassen,
- - Etappe d/ folgende Teilschritte umfasst:

d 1. Bestimmen eines Zylinders, der im Inneren des Rohrabschnitts bezeichnet ist, und
d 2. Bestimmen der Differenz zwischen dem Durchmesser des Zylinders und dem Gesamtdurchmesser des Kalibrierkörpers als kritische Größe,

und
- dass Etappe e/ für jedes Paar benachbarter Rohrabschnitte die Schaffung der Möglichkeit des Übergangs von einem Abschnitt zum nächsten ausgehend von besagter kritischer Größe umfasst, sowie der Winkelabweichung zwischen den Achsen der beiden Rohrabschnitte und mindestens einer Längsabmessung des Kalibrierkörpers.

2. Verfahren nach Anspruch 1, **dadurch gekennzeichnet, dass** die Messdaten Messungen zum Außenumfang des Rohres umfassen und Messungen zu dessen Wanddicke, die an einem Rohr durchgeführt werden, dessen Bewegung eine Längsverschiebung beinhaltet.

3. Verfahren nach Anspruch 2, **dadurch gekennzeichnet, dass** die Messungen zum Außenumfang des Rohres von Lasersensoren durchgeführt werden, wohingegen die Messungen zu dessen Wanddicke von Ultraschallsensoren durchgeführt werden, die über ein flüssiges Übertragungsmedium mit dem Rohr verbunden sind.

4. Verfahren nach Anspruch 3, bei dem die Ultraschallsensoren schwimmend montiert werden, um in Kontakt mit dem Rohr zu bleiben, **dadurch gekennzeichnet, dass** ein System zum Messen der Position der Lasersensoren in Bezug auf die Ultraschallsensoren vorgesehen ist.

5. Verfahren nach Anspruch 2, **dadurch gekennzeichnet, dass** die Messungen zum Außenumfang des Rohres und die Messungen zu dessen Wanddicke von Ultraschallsensoren durchgeführt werden, die über ein flüssiges Übertragungsmedium mit einem Wasserkasten, durch den das Rohr läuft, verbunden sind.

6. Verfahren nach einem der vorhergehenden Ansprüche, **dadurch gekennzeichnet, dass**:

- Schritt d/ die Bestimmung einer Form mit geraden Mantellinien umfasst, welche im Inneren der Innenfläche des Rohres, Abschnitt für Abschnitt, einbeschrieben ist
und
- Schritt e/ den Test umfasst, dass der Kalibrierkörper in die Form mit geraden Mantellinien jedes betrachteten Abschnitts eindringt.

7. Hilfsvorrichtung mit Maßkontrolle der Stahlrohre bei der Produktion umfassend:

- mindestens eine Messstation zum Erfassen von Messdaten, die für physikalische Messungen von außen an der Geometrie eines Stahlrohres repräsentativ sind, und
- Informatiksystem, das in der Lage ist:

• Datenvorlagen vorzubereiten, die für die Gesamtgeometrie eines Kalibrierkörpers repräsentativ sind, wobei diese Datenvorlagen im besagten ausgewählten Koordinatensystem anwendbar sind,
• ausgehend von den Messdaten, konvertierte Messdaten zu erzeugen, die eine dreidimensionale Darstellung durch Pixel von mindestens zwei Rohrabschnitten bilden, die mit Überlappung versetzt voneinander sind, wobei sich die besagte dreidimensionale Darstellung auf ein ausgewähltes Koordinatensystem bezieht, das einen Ursprungspunkt und eine in Bezug auf das Rohr befindliche Achse aufweist,
• für jeden Rohrabschnitt ausgehend von diesen konvertierten Messdaten und den Datenvorlagen eine kritische Größe zu bestimmen, die repräsentativ für den Durchlassspielraum des Kalibrierkörpers im Inneren des Rohrabschnitts ist, und
• eine Diagnose zu stellen zur Durchlässigkeit der Rohrabschnitte durch den Kalibrierkörper auf der Grundlage der besagten kritischen Größen und der relativen Positionen der Rohrabschnitte.

**dadurch gekennzeichnet, dass**:

- die Datenvorlagen einen Gesamtaußendurchmesser des Kalibrierkörpers umfassen,
- die Bestimmung der kritischen Größe die Suche nach einem beschriebenen Zylinder im Inneren des Rohrabschnitts umfasst und die Bestimmung der Differenz zwischen dem Durchmesser des Zylinders und dem Gesamtdurchmesser des Kalibrierkörpers als kritische Größe, und die Schaffung einer Diagnose für ein Paar benachbarter Rohrabschnitte, die Schaffung der Möglichkeit des Übergangs von einem Abschnitt zum nächsten ausgehend von besagter kritischer Größe umfasst, sowie der Winkelabweichung zwischen den Achsen der beiden Rohrabschnitte und mindestens einer Längsabmessung des Kalibrierkörpers.

8. Vorrichtung nach Anspruch 7, **dadurch gekennzeichnet, dass** die Messdaten Messungen zum Außenumfang des Rohres umfassen und Messungen zu dessen Wanddicke, die an einem Rohr durchgeführt werden, dessen Bewegung eine Längsverschiebung beinhaltet.

9. Vorrichtung nach Anspruch 8, **dadurch gekennzeichnet, dass** diese eine Laser-Messstation umfasst für Messungen zum Außenumfang des Rohres, und eine Station mit Ultraschallsensoren, die über ein flüssiges Übertragungsmedium mit dem Rohr verbunden ist, für Messungen bezüglich der Wanddicke des Rohres.

10. Vorrichtung nach Anspruch 9, bei dem die Ultraschallsensoren schwimmend montiert werden, um in Kontakt mit dem Rohr zu bleiben, **dadurch gekennzeichnet, dass** außerdem ein System zum Messen der Position der Lasersensoren bezüglich der Lasersensoren und Ultraschallsensoren vorgesehen ist.

11. Vorrichtung nach Anspruch 10, **dadurch gekennzeichnet, dass** die Messungen zum Außenumfang des Rohres und die Messungen zu dessen Wanddicke von einer Messstation erfolgen, die Ultraschallsensoren umfasst, die mit einem Wasserkasten zusammenwirken, durch den das Rohr läuft.

12. Vorrichtung nach einem der Ansprüche 7 bis 11, **dadurch gekennzeichnet, dass** das Computersystem angeordnet ist, um eine Form mit geraden Mantellinien zu bestimmen, welche im Inneren der Innenfläche des Rohres, Abschnitt für Abschnitt, einbeschrieben ist, und um zu prüfen, ob der Kalibrierkörper in die Form mit geraden Mantellinien jedes betrachteten Abschnitts eindringt.

13. Vorrichtung nach Anspruch 12, **dadurch gekennzeichnet, dass** das Computersystem angeordnet ist, um die 3D-Messdaten in Form von durch Windungen definierte und auf einen Mittelpunkt jeder Windung bezogene 2D-Daten zu verdichten, um dann diese 2D-Daten in Untergruppen abzurufen, die jeweils den Quasidurchmessern entsprechen, die im Wesentlichen parallel zueinander sind.

## Claims

1. Procedure to assist the inspection of steel tubes in production, comprising the following steps:

a. Acquire measurement data on the geometry of a steel tube, which is representative of physical measurements made from the outside;
b. Based on this measurement data, generate converted measurement data, forming a three-dimensional pixel representation of the inner wall of the said tube, over a longitudinal area of the tube, with the said three-dimensional representation referring to a selected system of coordinates, with a point of origin and an axis identified with respect to the tube;
c. Prepare the template data, which is representative of the overall geometry of a calibration body; this template data is applicable in the said system of coordinates selected;
d. Consider an initial section of the tube, for which converted measurement data is available, and based on this converted measurement data and the template data, determine a critical size that is representative of the margin of passage of the calibration body within this section of the tube;
e. Selectively repeat operation d/ for other tube sections, offset from one another with overlap, and
f. Establish a diagnosis of the traversability of the said longitudinal area of the tube by the calibration body, based on the critical sizes obtained in steps d/ and e/ and the relative positions of the successive tube sections;

**Characterised in that**:

- In step c/, the template data includes an overall outer diameter of the calibration body;
- Step d/ includes the following sub-steps:

d1. Determine a cylinder inscribed inside the tube section, and
d2. Determine the difference between the diameter of the inscribed cylinder and the overall diameter of the calibration body, as a critical size;

and

- For each pair of adjacent tube sections, step e/ includes the establishment of the possibility of passing from one section to the next based on the said critical size, the angular deviation between the axes of the two tube sections and at least one longitudinal dimension of the calibration body.

**2.** Procedure according to claim 1, **characterised in that** the measurement data includes measurements relating to the outer circumference of the tube and measurements relating to its wall thickness, made on a tube whose movement includes a longitudinal shift.

**3.** Procedure according to claim 2, **characterised in that** the measurements relating to the outer circumference of the tube are made by laser sensors, while the measurements relating to its wall thickness are made by ultrasonic sensors, coupled to the tube through a liquid transmission medium.

**4.** Procedure according to claim 3, in which the ultrasonic sensors are floatingly mounted to remain in cooperation with the tube, **characterised in that** a system for measuring the relative position of the laser sensors with respect to the ultrasonic sensors is provided for.

**5.** Procedure according to claim 2, **characterised in that** both the measurements relating to the outer circumference of the tube and the measurements relating to its wall thickness are made by ultrasonic sensors that cooperate with a water box through which the tube passes.

**6.** Procedure according to one of the previous claims, **characterised in that**:

- Step d/ includes the determination of a straight generator form that fits into the inner surface of the tube, section by section, and
- Step e/ includes testing that the calibration body passes into the straight generator form of each section considered.

**7.** System to assist in the dimensional inspection of steel tubes in production, comprising:

- At least one measurement station arranged to acquire measurement data, which is representative of physical measurements of the geometry of a steel tube made from the outside, and
- An IT system capable of:

• Storing template data, which is representative of the overall geometry of a calibration body; this template data is applicable in the said system of coordinates selected;
• Based on the measurement data, generating converted measurement data, forming a three-dimensional pixel representation of at least two tube sections, offset from one another with overlap, with this three-dimensional representation referring to a selected system of coordinates, with a point of origin and an axis identified with respect to the tube;
• For each section of the tube, based on its converted measurement data and the template data, determining a critical size that is representative of the margin of passage of the calibration body within this section of the tube, and
• Establishing a diagnosis of the traversability of the tube sections by the calibration body, based on the said critical sizes and the relative positions of the tube sections.
**Characterised in that**:

- The template data includes an overall outer diameter of the calibration body;
- The determination of the critical size includes the search for an inscribed cylinder within the tube section, and the determination of the difference between the diameter of the inscribed cylinder and the overall diameter of the calibration body, as a critical size,

and
For a pair of adjacent tube sections, the establishment of the diagnosis includes the establishment of the possibility of passing from one section to the next based on the said critical size, the angular deviation between the axes of the two tube sections and at least one longitudinal dimension of the calibration body.

**8.** System according to claim 7, **characterised in that** the measurement data includes measurements relating to the outer circumference of the tube and measurements relating to its wall thickness, made on a tube whose movement includes a longitudinal shift.

**9.** System according to claim 8, **characterised in that** it comprises a laser measurement station for measurements relating to the outer circumference of the tube, and an ultrasonic sensor station, coupled to the tube through a liquid transmission medium, for measurements relating to the tube's wall thickness.

10. System according to claim 9, in which the ultrasonic sensors are floatingly mounted to remain in cooperation with the tube, **characterised in that** a system for measuring the relative position of the laser sensors and the ultrasonic sensors is also provided for.

11. System according to claim 10, **characterised in that** both the measurements relating to the outer circumference of the tube and the measurements relating to its wall thickness are made by a measurement station with ultrasonic sensors cooperating with a water box through which the tube passes.

12. System according to one of claims 7 to 11, **characterised in that** the IT system is arranged to determine a straight generator form which fits into the inner surface of the tube, section by section, and to test whether the calibration body passes into the straight generator form of each section considered.

13. System according to claim 12, **characterised in that** the IT system is arranged to condense 3D measurement data in the form of 2D data defined by turns and referring to a central point of each turn, and then to re-sort this 2D data into sub-sets, each corresponding to almost identical diameters that are substantially parallel to one another.

**Fig.1**

Production de "ronds" d'acier — 10

Fabrication du tube — 11

Contrôle non destructif (défauts) — 12

Contrôle de rectitude — 13

Mise en place des connexions d'extémité — 14

Contôles dimensionnels — 15

Contrôle de traversabilité — 16

Décision sur le sort du tube — 17

Bon     à vérifier     Mauvais

**Fig.2**

Fig.3

1202
1301
1202
1302
D2
D1
1303
1204
1304
1203

Fig.4

1200
T
1300

Fig.5

T
WB
1401 · · · · · · · · · · · 1412

Fig.6

1421 · · · · · · · · · 1432
T
1401 · · · · 1412

EP 2 577 224 B1

# Fig.7

# Fig.8

# Fig.9

19

Fig.10

Fig.11

Fig.12

Fig.13

Fig.14

246 points
12 channels

$2\pi R$

Fig.15

AS1

AS2

AS6

AS3

AS4

AS5

Fig.15A

AS41

AS42

Fig.16

S_US_21

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0444800 A

- DE 102008060391 B3